# EUROPÄISCHE PATENTSCHRIFT

(11) **EP 0 347 520 B1**
(45) Veröffentlichungstag und Bekanntmachung des Hinweises auf die Patenterteilung: **03.03.1993**
(21) Anmeldenummer: 89102493.7
(22) Anmeldetag: 14.02.1989
(51) Int. Cl.: G01G 21/00, G01G 21/28

(54) **Windschutz für Präzisionswaagen**
Wind protection for precision balances
Protection contre le vent pour balances de précision

(30) Priorität: 21.06.1988 CH 2379/88
(43) Veröffentlichungstag der Anmeldung: 27.12.1989
(73) Patentinhaber: Mettler-Toledo AG, 8606 Greifensee (CH)
(72) Erfinder: Chrétien, Philippe, CH-8305 Dietlikon (CH); Bauert, Bruno, CH-8925 Ebertswil (CH)

(56) Entgegenhaltungen:
- CH-A- 560 893
- DE-C- 3 508 873
- DE-U- 8 714 916

## Beschreibung

Gegenstand der vorliegenden Erfindung ist ein Windschutz aus einem oben und unten offenen, die Waagschale umgreifenden Hohlkörper für Präzisionswaagen mit freiliegender Waagschale.

Bei modernen Präzisionswaagen mit hoher Auflösung und freiliegender Waagschale beeinflussen bereits geringe Luftbewegungen im Raum die Genauigkeit der Wägung.
Aus der Schweizer Patentschrift Nr. 560 893 ist ein Windschutz bekannt, der aus einem oben und unten offenen, auf die Waage aufsetzbaren Hohlkörper besteht, der mehrere miteinander verbundene Teilwände umfasst, deren gemeinsame Berührungskanten als Gelenk ausgebildet sind. Der bekannte Hohlkörper ist derart ausgestaltet, dass auch zwei oder mehrere gleich hohe, gleich ausgebildete Hohlkörper übereinander zusammengefügt werden können.
Nachteilig an diesem bekannten Windschutz ist dessen ästhetisch nicht befriedigendes Aussehen und die nicht einfach an das Wägegut anpassbare Höhe. Der aus mehreren, säulenartig übereinandergestellten Elementen bestehende hohe Windschutz kann bei Berührung leicht umfallen oder lässt sich bei zusammengenieteten oder zusammengeklebten Elementen nachträglich nicht mehr an das Wägegut anpassen.

Aufgabe der vorliegenden Erfindung ist die Schaffung eines Windschutzes, dessen Höhe stets dem jeweiligen Wägegut angepasst und jederzeit veränderbar ist und welcher bei Nichtgebrauch sowie beim Transport nur einen geringen Raum einnimmt.

Diese Aufgabe wird durch eine Ausbildung des Windschutzes ermöglicht, bei dem auf einem ersten Hohlkörper mindestens ein zweiter, ahnlich ausgebildeter Hohlkörper teleskopartig verschieblich angeordnet ist.
Vorzugsweise ist jeweils auf der Oberfläche des oberen in den unteren hineingreifenden Hohlkörper ein Zwischenring aufgesetzt, welcher den oberen Hohlkörper daran hindert, in den unteren hineinzugleiten. Die Hohlkörper können, entsprechend der Ausbildung der Waage, bzw. der Waagschale, einen runden, ovalen, recht-oder vieleckigen Querschnitt aufweisen. Ein seitlich der Waage auf dem Tisch abgestützteruntererHohlkörper bewirkt, dass bei dessen Berührung keine Erschütterungen auf das Waagengehäuse übertragen werden können.
Ein auf den obersten Hohlkörper aufgesetzter Deckel verhindert während der Wägung, dass das Wägegut berührt werden kann,und bei Nichtgebrauch der Waage die Ablagerung von Staub auf der Waagschale.

Anhand von illustrierten Ausführungsbeispielen wird die Erfindung näher erläutert. Es zeigen:
- Figur 1: eine Waage mit runder Waagschale und einem auf die Oberfläche des Waagengehäuses aufgesetzten runden Windschutz, und
- Figur 2: eine Waage mit einem auf die Standfläche der Waage aufgesetzten rechteckigen Windschutz.

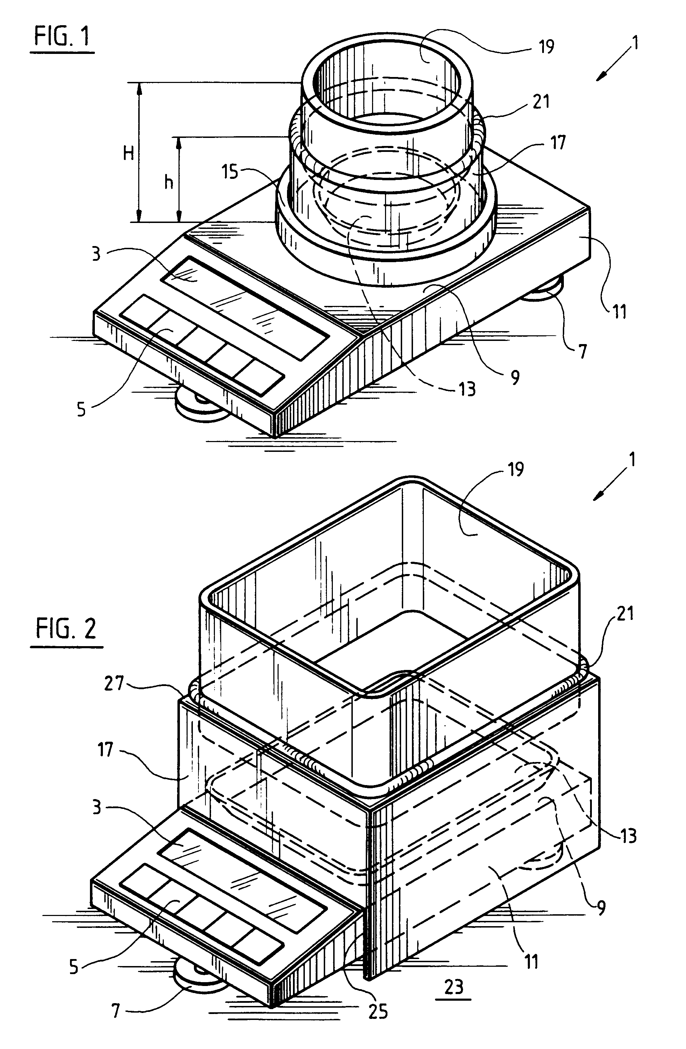

Die in Figur 1 nur schematisch dargestellte Präzisionswaage 1 mit Anzeige 3 und Bedienungselementen 5 steht auf drei Füssen 7. Auf der Oberseite 9 des Waagengehäuses 11 ist eine Waagschale 13 aufgesetzt, die mit der Waagenmechanik (nicht sichtbar) verbunden ist. Die Waagschale 13 ist von einem von der Oberseite 9 abstehenden Blechring 15 umgeben. Der analog der Waagschale 13 einen runden Querschnitt aufweisende Blechring 15 liegt in einem Abstand von der Peripherie der Waagschale 13.

Ein zylindrisch unten und oben offener erster Hohlkörper 17 ist in den Blechring 15 eingesteckt und stützt sich auf der Oberfläche 9 des Waagengehäuses 11 ab. Er könnte auch den Blechring 15 aussen umgreifen oder auf diesen aufgesetzt sein. Ein zweiter, ähnlich ausgebildeter oben und unten offener Hohlkörper 19, dessen Aussendurchmesser geringfügig kleiner ist als der Innendurchmesser des ersten Hohlkörpers 17, ist in letzteren hineingeschoben und wird durch einen Zwischenring 21 gehalten. Der Zwischenring 21 liegt selbsthemmend auf der Aussenfläche des zweiten Hohlkörpers 19 auf und besteht aus einem elastischen Material, Z.B. Gummi oder Kunststoff, oder aus einem federnden Metall, dessen Oberfläche mit einem schlecht gleitenden Ueberzug versehen ist.

In den zweiten, oben liegenden Hohlkörper 19 kann - falls erwünscht - teleskopartig ein weiterer Hohlkörper eingesetzt sein (keine Abbildung).
Die Hohlkörper 17 und 19 können, wie in Figur 1 gezeigt, rund sein. Sie können aber auch einen ovalen oder mehreckigen Querschnitt aufweisen.

Im Beispiel nach Figur 2 ist die Waagschale 13 rechteckförmig und bedeckt im wesentlichen die gesamte Oberfläche 9 des Waagengehäuses 11. Der untere Hohlkörper 17 kann in dieser Ausführung nicht auf der Oberfläche 9 des Waagengehäuses 11 abgestützt werden und steht deshalb auf der Auflagefläche 23 der Waage 1, z.B. auf einem Tisch. Auf der der Bedienungsperson zugekehrten Seite weist der erste Hohlkörper 17 eine Ausnehmung 25 auf, damit die Bedienungs- und Anzeigeinstrumente 3 und 5 ausserhalb des Hohlkörpers 17 frei zugänglich bleiben. Der Zwischenring 21 ist auch in dieser Ausführungsform dem Querschnitt des Hohlkörpers 19 angepasst und liegt auf dessen Oberfläche selbsthemmend an. Besteht der Zwischenring 21 aus Gummi, so legt sich dieser vorwiegend satt an die Ecken an; besteht er jedoch aus federndem Metall, so kann durch entsprechende Biegung der geraden Abschnitte auch ein Druck im Bereich der ebenen Flächen des zweiten Hohlkörpers 19 erreicht werden.

Die beiden Hohlkörper 17 und 19 sind mit der Waage 1 nicht fest verbunden und können bei Bedarf auf diese bzw. (Fig. 2) auf deren Auflagefläche 23 aufgesetzt werden. Bei niedrigen Wägegütern können die beiden Hohlkörper 17 und 19 ineinandergeschoben werden, so dass deren gesamte Höhe H im wesentlichen nur der Höhe h des ersten, unten liegenden Hohlkörpers 17 entspricht. Wird ein Windschutz für hohe Wägegüter benötigt, so kann der innenliegende zweite Hohlkörper 19 aus dem ersten herausgezogen und der Zwischenring 23 nach unten verschoben werden, damit der zweite Hohlkörp er 19 seine eingestellte Lage beibehält. Beim Verringern der Höhe H der als Windschutz dienenden Hohlkörper 17 und 19 lässt sich der zweite Hohlkörper 19 ohne Zuhilfenahme von Werkzeugen durch leichten Druck von oben in den ersten Hohlkörper 17 einschieben.

In einer weiteren Ausgestaltung der Erfindung kann der Zwischenring 21 auch fest mit der Oberkante 27 des ersten Hohlkörpers 17 verbunden sein, damit beim Herausziehen des zweiten Hohlkörpers 19 der Ring 21 nicht von Hand nach unten verschoben werden muss.

Auf den zuoberst liegenden Hohlkörper 19 kann ein in den Figuren nicht dargestellter Deckel zum Verschliessen des Wägeraumes aufgesetzt werden. Der Deckel kann als Stülp- oder als Einsteckdeckel ausgebildet sein.

Die Hohlkörper 17, 19 werden meist aus Glas oder transparentem Kunststoff bestehen. Es kommen jedoch auch andere formbeständige Materialien in Betracht.

## Patentansprüche

1. Windschutz aus einem oben und unten offenen, die Waagschale (1) umgreifenden Hohlkörper (17) für Präzisionswaagen (1) mit freiliegender Waagschale (13), dadurch gekennzeichnet, dass auf einem ersten Hohlkörper (17) mindestens ein zweiter, ähnlich ausgebildeter Hohlkörper (19) teleskopartig verschieblich angeordnet ist.

2. Windschutz nach Anspruch 1, dadurch gekennzeichnet, dass der zweite Hohlkörper (19) in den ersten einschiebbar ist.

3. Windschutz nach Anspruch 2, dadurch gekennzeichnet, dass auf der Aussenfläche des zweiten Hohlkörpers (19) ein axial verschieblicher Zwischenring (21) aufgesetzt ist.

4. Windschutz nach Anspruch 3, dadurch gekennzeichnet, dass der Zwischenring (21) auf der Aussenfläche des zweiten Hohlkörpers (19) selbsthemmend verschieblich ist.

5. Windschutz nach einem der Ansprüche 3 oder 4, dadurch gekennzeichnet, dass der Zwischenring (21) aus einem elastisch dehnbaren und/oder federnden Material hergestellt ist.

6. Windschutz nach einem der Ansprüche 1 bis 5, dadurch gekennzeichnet, dass die Querschnitte der Hohlkörper (17,19) rund, oval, recht- oder vieleckig ausgebildet sind.

7. Windschutz nach einem der Ansprüche 1 bis 6, dadurch gekennzeichnet, dass der erste Hohlkörper (17) auf der Oberfläche (9) der Waage (1) abgestützt ist.

8. Windschutz nach einem der Ansprüche 1 bis 6, dadurch gekennzeichnet, dass der erste Hohlkörper (17) seitlich der Waage (1) auf der Standfläche (23) der Waage (1) abgestützt ist.

9. Windschutz nach einem der Ansprüche 3 bis 8, dadurch gekennzeichnet, dass der Zwischenring (21) auf der Oberkante des unteren Hohlkörpers (17) aufgesetzt ist.

## Claims

1. An anti-draught guard comprising an upwardly and downwardly open hollow body (17) which extends around the weighing pan (13), for precision balances (1) with an exposed weighing pan (13), characterised in that telescopically displaceably arranged on a first hollow body (17) is at least one second hollow body (19) of a similar configuration.

2. An anti-draught guard according to claim 1 characterised in that the second hollow body (19) is slidable into the first.

3. An anti-draught guard according to claim 2 characterised in that an axially displaceable intermediate ring (21) is fitted on the outside surface of the second hollow body (19).

4. An anti-draught guard according to claim 3 characterised in that the intermediate ring (21) is self-lockingly displaceable on the outside surface of the second hollow body (19).

5. An anti-draught guard according to one of claims 3 and 4 characterised in that the intermediate ring (21) is made from an elastically stretchable and/or resilient material.

6. An anti-draught guard according to one of claims 1 to 5 characterised in that the cross-sections of the hollow bodies (17, 19) are round, oval, rectangular or polygonal.

7. An anti-draught guard according to one of claims 1 to 6 characterised in that the first hollow body (17) is supported on the surface (9) of the balance (1).

8. An anti-draught guard according to one of claims 1 to 6 characterised in that the first hollow body (17) is supported laterally of the balance (1) on the surface (23) on which the balance (1) stands.

9. An anti-draught guard according to one of claims 3 to 8 characterised in that the intermediate ring (21) is fitted on the upper edge of the lower hollow body (17).

## Revendications

1. Protection contre les courants d'air destinée à des balances de précision (1), dont le plateau (13) est à découvert, et formée d'un corps creux (17) entourant le plateau (1) et ouvert en haut et en bas, caractérisée en ce qu'au moins un deuxième corps creux (19) de réalisation analogue à celle d'un premier corps creux (17) est monté déplaçable télescopiquement sur celui-ci.

2. Protection contre les courants d'air selon la revendication 1, caractérisée en ce que le deuxième corps creux (19) s'enfile dans le premier.

3. Protection contre les courants d'air selon la revendication 2, caractérisée en ce qu'une bague intermédiaire (21) déplaçable axialement est posée sur la surface extérieure du deuxième corps creux (19).

4. Protection contre les courants d'air selon la revendication 3, caractérisée en ce que la bague intermédiaire (21) est déplaçable avec auto-blocage sur la surface extérieure du deuxième corps creux (19).

5. Protection contre les courants d'air selon l'une des revendications 3 ou 4, caractérisée en ce que la bague intermédiaire (21) est réalisée en matière extensible élastiquement et/ou élastique.

6. Protection contre les courants d'air selon l'une des revendications 1 à 5, caractérisée en ce que les sections des corps creux (17, 19) sont circulaires, ovales, rectangulaires ou polygonales.

7. Protection contre les courants d'air selon l'une des revendications 1 à 6, caractérisée en ce que le premier corps creux (17) prend appui sur la surface supérieure (9) de la balance (1).

8. Protection contre les courants d'air selon l'une des revendications 1 à 6, caractérisée en ce que le premier corps creux (17) prend appui, sur les côtés de la balance (1), sur la surface (23) sur laquelle cette dernière repose.

9. Protection contre les courants d'air selon l'une des revendications 3 à 8, caractérisée en ce que la bague intermédiaire (21) est montée sur le bord supérieur du corps creux inférieur (17).
